# EUROPEAN PATENT APPLICATION

(11) **EP 4 787 815 A1**
(43) Date of publication of application: **05.08.2026**
(21) Application number: 24887806.8
(22) Date of filing: 29.10.2024
(51) Int. Cl.: H04L 65/1045

(54) **CALL METHOD AND APPARATUS, FUNCTIONAL ENTITY, AND NETWORK DEVICE**

(30) Priority: 07.11.2023 CN 202311472990
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: LIU, Yue, Beijing 100032 (CN)
(74) Representative: Murgitroyd & Company
(86) International application number: PCT/CN2024/127968
(87) International publication number: WO 2025/098194

(57) **Abstract**

A call method, an apparatus, a functional entity, and a network device are provided. The method includes: receiving a first message sent by a first application, the first message being used to request a first operation of a real-time communication service between a first terminal and a second terminal; sending, based on the first message, a second message to a first network device in a network where the first terminal is located, the second message being used to request execution of the first operation.

## Description

### CROSS-REFERENCE TO RELATED APPLICATION

The present application claims priority to Chinese Patent Application No. 202311472990.4 filed in China on November 7, 2023, a disclosure of which is incorporated herein by reference in its entirety.

### TECHNICAL FIELD

The present disclosure relates to the field of communication technology, and in particular, to a call method, an apparatus, a functional entity, and a network device.

### BACKGROUND

A 5th Generation Mobile Communication Technology (5G) New Call is an ultra-high-definition voice call service, a video call service, and related value-added services based on a 5G network, such as a 5G ultra-high-definition video call, 5G video customer service, accessibility communication features, screen sharing, remote collaboration, and Augmented Reality (AR) fun calls, which can provide users with a visualized, multimedia, and highly perceptive ultra-high-definition call experience. "New call" is a specific term, which may include 5G new call, new call, Next Generation-Real Time Communication (NGRTC), real-time communication, Enhanced MultiMedia Telephony (eMMTel), MultiMedia Telephony (MMTel), Internet Protocol (IP) Multimedia Subsystem (IMS) Data Channel (DC), and the like.

At present, a new call network architecture supports a procedure of establishing new call between two terminals in an IMS network, but does not support a third-party application or a user in a vertical industry initiating a call between two terminals by invoking a capability exposure interface, wherein the call may be a 5G new call.

### SUMMARY

The objective of the technical solution of the present disclosure is to provide a call method, an apparatus, a functional entity, and a network device, for implementing invocation of a 5G new call between terminals by a third-party application or a user in a vertical industry.

An embodiment of the present disclosure provides a call method, performed by a first functional entity, including:
receiving a first message sent by a first application, the first message being used to request a first operation of a real-time communication service between a first terminal and a second terminal;
sending, based on the first message, a second message to a first network device in a network where the first terminal is located, the second message being used to request execution of the first operation.

Optionally, the call method, wherein the first operation includes one or more of:
establishing the real-time communication service; or
terminating the real-time communication service.

Optionally, the call method, wherein the first message includes one or more of:
a user identifier of the first terminal;
a user identifier of the second terminal;
first indication information used to indicate whether a call capability of the real-time communication service is to be used;
service configuration information;
a call event notification address; or
a call session identifier.

Optionally, the call method, wherein the first operation includes establishing the real-time communication service, and after sending the second message to the first network device in the network where the first terminal is located, the method further includes:
receiving a third message sent by the first network device, the third message being used to indicate that the first terminal confirms execution of establishment of the real-time communication service;
sending a fourth message to the first network device, the fourth message being used to request establishment of a session between the first terminal and the first application.

Optionally, the call method, further including:
after receiving the third message sent by the first network device, sending a fifth message to a second network device where the second terminal is located, the fifth message being used to request establishment of the real-time communication service between the first terminal and the second terminal.

Optionally, the call method, further including at least one of:
receiving a sixth message sent by a second network device, the sixth message being used to indicate that the second terminal confirms execution of establishment of the real-time communication service, and the sixth message including capability information of the second terminal for executing the real-time communication service;
sending a seventh message to the first network device, the seventh message including the capability information of the second terminal for executing the real-time communication service;
receiving an eighth message sent by the first network device, the eighth message including capability information of the first terminal for executing the real-time communication service;
sending a ninth message to the second network device, the ninth message including the capability information of the first terminal for executing the real-time communication service; or
sending a tenth message to the first terminal, the tenth message including a confirmation indication used to indicate establishment of the real-time communication service between the first terminal and the second terminal.

Optionally, the call method, further including:
sending a first notification message to the first application, wherein the first notification message includes one or more of:
a notification event indicating establishment of the real-time communication service between the first terminal and the second terminal;
a result of establishment of the real-time communication service between the first terminal and the second terminal;
a call identifier for establishment of the real-time communication service between the first terminal and the second terminal; or
a program list being used during execution of the real-time communication service between the first terminal and the second terminal.

Optionally, the call method, wherein the notification event includes one or more of:
establishment of a session between the first functional entity and the first terminal;
establishment of a session from the second terminal to the first terminal;
establishment of a session from the first terminal to the second terminal;
termination of the session from the second terminal to the first terminal; or
termination of the session from the first terminal to the second terminal.

Optionally, the call method, further including:
sending a second notification message to a third network device, wherein the second notification message includes service configuration information of the real-time communication service between the first terminal and the second terminal.

Optionally, the call method, wherein the first operation includes terminating the real-time communication service, and the method further includes:
after receiving an eleventh message sent by the first network device in response to the second message, sending a twelfth message to a second network device where the second terminal is located, wherein the eleventh message is used to indicate that the first terminal terminates the real-time communication service with the second terminal.

Optionally, the call method, further including:
receiving a thirteenth message sent by the second network device, the thirteenth message being used to indicate that the second terminal terminates the real-time communication service with the first terminal.

Optionally, the call method, further including:
receiving a fourteenth message sent by the first application, the fourteenth message including a call session identifier and being used to request a query of a real-time communication service corresponding to the call session identifier;
sending, to the first application, one or more of: a user identifier of the first terminal, a user identifier of the second terminal, or service configuration information of the real-time communication service corresponding to the call session identifier.

An embodiment of the present disclosure further provides a call method, performed by a first network device, including:
receiving a second message sent by a first functional entity, the second message being used to request execution of a first operation of a real-time communication service between a first terminal and a second terminal;
forwarding the second message to the first terminal.

Optionally, the call method, wherein the first operation includes one or more of:
establishing the real-time communication service; or
terminating the real-time communication service.

Optionally, the call method, wherein the first operation includes establishing the real-time communication service, and the method further includes:
receiving a fifteenth message sent by the first terminal, the fifteenth message including capability information of the first terminal for executing the real-time communication service;
when it is determined, based on the capability information of the first terminal for executing the real-time communication service, that the first terminal has an execution capability of the real-time communication service, sending the fifteenth message to a third network device, to cause the third network device to determine service configuration information for executing the real-time communication service by the first terminal;
sending a third message to the first functional entity, the third message being used to indicate that the first terminal confirms execution of establishment of the real-time communication service.

Optionally, the call method, further including one or more of:
receiving a fourth message sent by the first functional entity, the fourth message being used to request the first terminal to establish a session with the first application;
forwarding the fourth message to the first terminal;
receiving a seventh message sent by the first functional entity, the seventh message including capability information of the second terminal for executing the real-time communication service;
after forwarding the seventh message to the first terminal, receiving an eighth message sent by the first terminal, the eighth message including the capability information of the first terminal for executing the real-time communication service, and forwarding the eighth message to the first functional entity;
receiving a tenth message sent by the first functional entity, the tenth message including a confirmation indication used to indicate establishment of the real-time communication service between the first terminal and the second terminal; or
forwarding the tenth message to the first terminal.

Optionally, the call method, wherein the first operation includes terminating the real-time communication service, and the method further includes:
receiving an eleventh message sent by the first terminal in response to the second message, the eleventh message being used to indicate that the first terminal terminates the real-time communication service with the second terminal;
forwarding the eleventh message to the first functional entity.

An embodiment of the present disclosure further provides a call method, performed by a first terminal, including:
receiving a second message forwarded by a first network device and sent by a first functional entity, the second message being used to request execution of a first operation of a real-time communication service between the first terminal and a second terminal;
executing the first operation based on the second message.

Optionally, the call method, wherein the first operation includes one or more of:
establishing the real-time communication service; or
terminating the real-time communication service.

Optionally, the call method, wherein the first operation includes establishing the real-time communication service, and executing the first operation based on the second message includes:
sending a fifteenth message to the first network device based on the second message, the fifteenth message including capability information of the first terminal for executing the real-time communication service.

Optionally, the call method, further including one or more of:
receiving a fourth message sent by the first network device, the fourth message being used to request the first terminal to establish a session with the first application;
establishing the session with the first application based on the fourth message;
receiving a seventh message sent by the first network device, the seventh message including capability information of the second terminal for executing the real-time communication service;
sending an eighth message to the first network device, the eighth message including the capability information of the first terminal for executing the real-time communication service; or
receiving a tenth message sent by the first network device, the tenth message including a confirmation indication used to indicate establishment of the real-time communication service between the first terminal and the second terminal.

Optionally, the call method, further including:
after obtaining a confirmation indication of establishment of the real-time communication service between the first terminal and the second terminal, obtaining, by a third network device, service configuration information used for execution, in a local network, of the real-time communication service between the first terminal and the second terminal, and obtaining, by a fourth network device, service configuration information used for execution, in a remote network, of the real-time communication service between the first terminal and the second terminal.

Optionally, the call method, wherein the first operation includes terminating the real-time communication service, and executing the first operation based on the second message includes:
sending an eleventh message to the first network device, the eleventh message being used to indicate that the first terminal terminates the real-time communication service with the second terminal.

An embodiment of the present disclosure further provides a functional entity, wherein the functional entity is a first functional entity, and includes a transceiver configured to:
receive a first message sent by a first application, the first message being used to request a first operation of a real-time communication service between a first terminal and a second terminal;
send, based on the first message, a second message to a first network device in a network where the first terminal is located, the second message being used to request execution of the first operation.

An embodiment of the present disclosure further provides a network device, wherein the network device is a first network device, and includes a transceiver configured to:
receive a second message sent by a first functional entity, the second message being used to request execution of a first operation of a real-time communication service between a first terminal and a second terminal;
forward the second message to the first terminal.

An embodiment of the present disclosure further provides a terminal, wherein the terminal is a first terminal, and includes a transceiver and a processor, wherein:
the transceiver is configured to receive a second message forwarded by a first network device and sent by a first functional entity, the second message being used to request execution of a first operation of a real-time communication service between the first terminal and a second terminal;
the processor is configured to execute the first operation based on the second message.

An embodiment of the present disclosure further provides a call apparatus, applied to a first functional entity, including:
a first receiving module configured to receive a first message sent by a first application, the first message being used to request a first operation of a real-time communication service between a first terminal and a second terminal;
a first sending module configured to send, based on the first message, a second message to a first network device in a network where the first terminal is located, the second message being used to request execution of the first operation.

An embodiment of the present disclosure further provides a call apparatus, applied to a first network device, including:
a second receiving module configured to receive a second message sent by a first functional entity, the second message being used to request execution of a first operation of a real-time communication service between a first terminal and a second terminal;
a second sending module configured to forward the second message to the first terminal.

An embodiment of the present disclosure further provides a call apparatus, applied to a first terminal, including:
a third receiving module configured to receive a second message forwarded by a first network device and sent by a first functional entity, the second message being used to request execution of a first operation of a real-time communication service between the first terminal and a second terminal;
a processing module configured to execute the first operation based on the second message.

An embodiment of the present disclosure further provides a network device, including a processor, a memory, and a program stored on the memory and executable on the processor, wherein the program, when executed by the processor, implements the call method according to any one of the above.

An embodiment of the present disclosure further provides a terminal, including a processor, a memory, and a program stored on the memory and executable on the processor, wherein the program, when executed by the processor, implements the call method according to any one of the above.

An embodiment of the present disclosure further provides a readable storage medium storing thereon a program, wherein the program, when executed by a processor, implements steps of the call method according to any one of the above.

At least one of the above technical solutions of the present disclosure has the following beneficial effects:
by using the call method according to the embodiments of the present disclosure, a first functional entity is provided between a first application for the third-party application or the user in the vertical industry and a network system for implementing a real-time communication service between terminals, and the first functional entity is interfaced with the network system, so that a first message sent by the first application and requesting a first operation of a real-time communication service between a first terminal and a second terminal can be obtained, and a second message for executing the first operation is sent to a network device in a network where the terminal is located, thereby implementing invocation of a 5G new call (real-time communication service) between terminals through the first application.

### BRIEF DESCRIPTION OF THE DRAWINGS

FIG. 1a is a schematic diagram of a system architecture using the call method according to an embodiment of the present disclosure;
FIG. 1b is another schematic diagram of the system architecture using the call method according to an embodiment of the present disclosure;
FIG. 2 is a schematic flowchart of the call method according to Embodiment 1 of the present disclosure;
FIG. 3a is a schematic flowchart of Implementation 1 using the call method according to an embodiment of the present disclosure;
FIG. 3b is another schematic flowchart of Implementation 1 using the call method according to an embodiment of the present disclosure;
FIG. 3c is yet another schematic flowchart of Implementation 1 using the call method according to an embodiment of the present disclosure;
FIG. 4 is a schematic flowchart of Implementation 2 using the call method according to an embodiment of the present disclosure;
FIG. 5 is a schematic flowchart of Implementation 3 using the call method according to an embodiment of the present disclosure;
FIG. 6 is a schematic flowchart of the call method according to Embodiment 2 of the present disclosure;
FIG. 7 is a schematic flowchart of the call method according to Embodiment 3 of the present disclosure;
FIG. 8 is a schematic structural diagram of a functional entity according to an embodiment of the present disclosure;
FIG. 9 is a schematic structural diagram of a network device according to an embodiment of the present disclosure;
FIG. 10 is a schematic structural diagram of a terminal according to an embodiment of the present disclosure;
FIG. 11 is a schematic structural diagram of a call apparatus according to Embodiment 1 of the present disclosure;
FIG. 12 is a schematic structural diagram of a call apparatus according to Embodiment 2 of the present disclosure;
FIG. 13 is a schematic structural diagram of a call apparatus according to Embodiment 3 of the present disclosure.

### DETAILED DESCRIPTION

In order to make the technical problems, technical solutions, and advantages to be solved by the present disclosure clearer, a detailed description will be given below in conjunction with the accompanying drawings and specific embodiments.

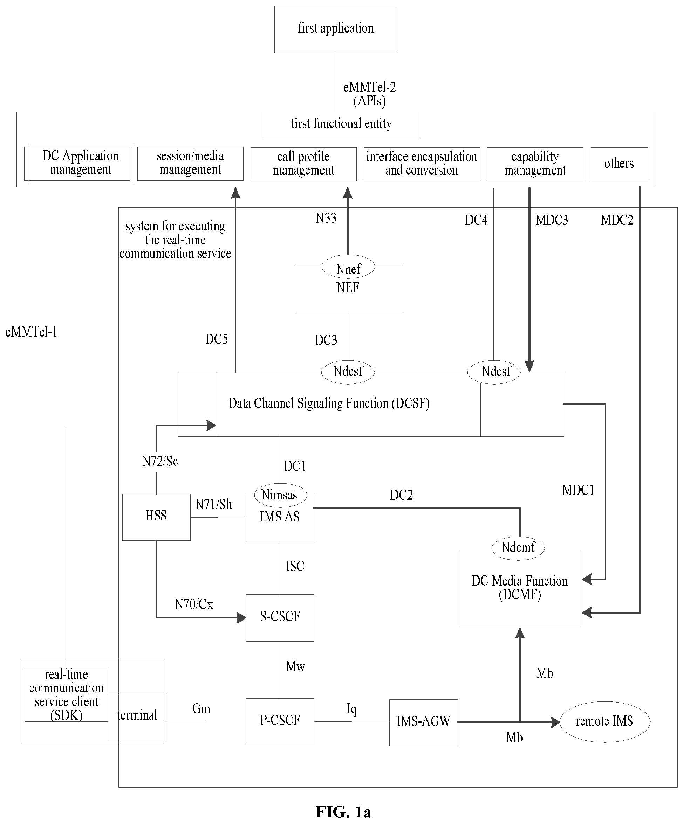

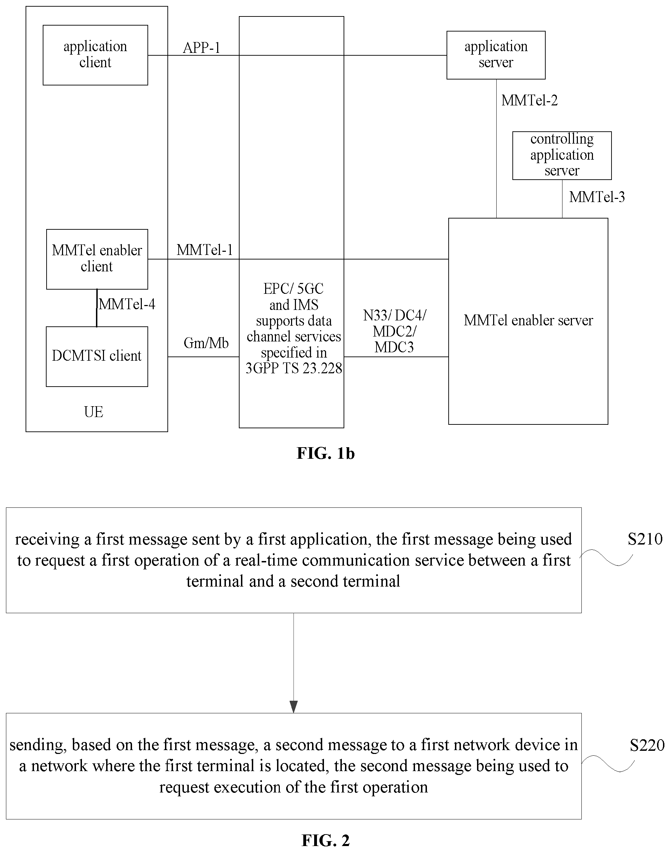

FIG. 1a and FIG. 1b are schematic diagrams of a system architecture using the call method according to an embodiment of the present disclosure. The system using the call method includes a first application, a first functional entity, and a network system for implementing real-time communication services between terminals. The Application Server in FIG. 1b corresponds to the Application Provider in FIG. 1a.

In one implementation, optionally, as shown in FIG. 1, the network system for implementing real-time communication services between terminals includes: a terminal, a Network Exposure Function (NEF), a Data Channel Signaling Function (DCSF), an IP Multimedia Subsystem Application Server (IMS AS), a Call Session Control Function (CSCF), and a Data Channel (DC) Media Function (DCMF), etc.

It should be noted that the structure of the above network system is merely an example and is not limited thereto. For example, in some network systems for implementing real-time communication services between terminals, the DCSF network function in the above network system may be a 5G Voice over New Radio (VoNR)+ capability network element, and the DCMF network function may be a VoNR+ media plane, a Media Function (MF), etc. The NEF may be a Service Capability Exposure Function (SCEF), etc.

In the call method according to the embodiments of the present disclosure, in order to enable a third-party application or a user in a vertical industry to invoke 5G new calls between terminals, a first functional entity is arranged between a first application for the third-party application or the user in the vertical industry and a network system for implementing real-time communication services between terminals. The first functional entity is connected to the network system via an interface, can obtain a first message sent by the first application for requesting a first operation of a real-time communication service between a first terminal and a second terminal, and sends a second message for executing the first operation to a network device in the network where the terminal is located, thereby implementing invocation of the 5G new call (real-time communication service) between terminals through the first application. Here, the third-party application or the user in the vertical industry may be a device such as an APP, an application server, a web page, an enterprise IP Private Branch eXchange (IPPBX), etc.; "new call" is a specific term, which may include 5G new call, new call, NGRTC, real-time communication, eMMTel, MMTel, IMS DC, etc.

As shown in FIG. 2, a call method according to an embodiment of the present disclosure, performed by a first functional entity, the method includes:
step S210, receiving a first message sent by a first application, the first message being used to request a first operation of a real-time communication service between a first terminal and a second terminal;
step S220, sending, based on the first message, a second message to a first network device in a network where the first terminal is located, the second message being used to request execution of the first operation.

In the embodiments of the present disclosure, optionally, the mentioned real-time communication service may also be expressed as new call, Enhanced Multimedia Telephony (eMMTel), enhanced multimedia telephony, enhanced call, etc.

The real-time communication service is a related value-added service based on ultra-clear voice calls, video call services, etc., such as implementing ultra-clear video calls, video customer service, accessibility communication functions, screen sharing, remote collaboration, AR fun calls, etc., which can provide users with a visual, multimedia, and high-perception ultra-clear call experience.

Optionally, the first functional entity may be any one of a new call enabler (eMMtel Enabler), an IMS application server, or an Application Function (AF) server within a 5G network, and the specific implementation structure is related to network deployment. Here, the eMMtel Enabler may also be a MultiMedia Telephony Enabler (MMTel Enabler), an MMTel Enabler Server, a new call capability exposure server, etc.

Optionally, the first application may include one or more of application devices providing a third-party application or a vertical industry, such as an Application (APP), a Data Channel Application Server (DC Application Server), a webpage, and an enterprise IP Private Branch eXchange (IPPBX).

By using the call method according to the embodiment of the present disclosure, with reference to FIG. 1 and FIG. 2, by adding a first functional entity between the first application and the network system for implementing real-time communication services between terminals, the first functional entity is connected to interfaces between the network system and the first application (e.g., an application server providing third-party applications or vertical industries), for example, connected to signaling-related interfaces DC3 and DC4 exposed by the NEF, and media-related interfaces MDC2 and MDC3. Through processing of the first functional entity, the above exposed network element function-level interfaces are encapsulated into service application-level interfaces, which are exposed to the first application via the first functional entity capability exposure interface (e.g., eMMTel-2, MMTel-2, etc.), thereby implementing scheduling of the real-time communication service between the first terminal and the second terminal.

Optionally, the first functional entity may further integrate a DC application management function and connect to the DCSF via a DC5 interface.

In another implementation, optionally, the first functional entity may further include, but is not limited to, the following functions:
DC application management: used for DC application developers to upload and for terminals to download real-time communication service DC applications during a call, with functions such as storage and management of DC applications;
session/media management: the first functional entity, serving as a relevant communication end for the real-time communication service, is used for generating a session (including empty Session Description Protocol (SDP) signaling, black hole SDP signaling, etc.) toward the terminal based on a request from the third-party application or the user in the vertical industry, mapping received Session Initiation Protocol (SIP) request/response content, generating SIP requests based on SIP responses, etc., while maintaining session-related states and correspondences between sessions and 5G new call enabler capability exposure requests/responses;
service configuration information management: the first functional entity, based on specific session information of a certain type of session (e.g., a specific session, or sessions related to each user, etc.), delivers information about DC applications usable for that specific type of session;
interface encapsulation and conversion: used for encapsulation and conversion between new call-related sessions and media on the IMS side and the first functional entity capability exposure Application Programming Interface (API), while also supporting encapsulation and conversion of other application-layer capabilities;
capability management: used for implementing management functions such as related capability discovery, capability invocation authentication, and authorization.

In the embodiments of the present disclosure, optionally, the first operation includes one or more of:
establishing the real-time communication service; or
terminating the real-time communication service.

In the embodiments of the present disclosure, using the call method according to the embodiment, through the first functional entity, the first application can implement a control operation of establishing the real-time communication service between the first terminal and the second terminal, and/or implement a control operation of the first application terminating the real-time communication service between the first terminal and the second terminal.

Optionally, the first message includes one or more of:
a user identifier of the first terminal;
a user identifier of the second terminal;
first indication information used to indicate whether a call capability of the real-time communication service is to be used;
service configuration information;
a call event notification address; or
a call session identifier.

In this implementation, by including one or more of the above contents in the first message sent by the first application to the first functional entity, information about the terminal of the requested real-time communication service, service configuration information, call event information, etc., is sent to the first functional entity, for requesting the corresponding terminal to execute the real-time communication service of the corresponding operation.

The above user identifier of the first terminal and user identifier of the second terminal may include a phone number, a SIP Uniform Resource Identifier (URI), a Tel URI, other terminal representations, etc.

The above first indication information is used to indicate whether the call capability of the real-time communication service is to be used, such as data channel capability (DC capability), etc.

The above service configuration information may be, for example, a DC application list, or a specific DC application to be used, etc. The data channel application (DC application) may also be referred to as a mini-program, etc.

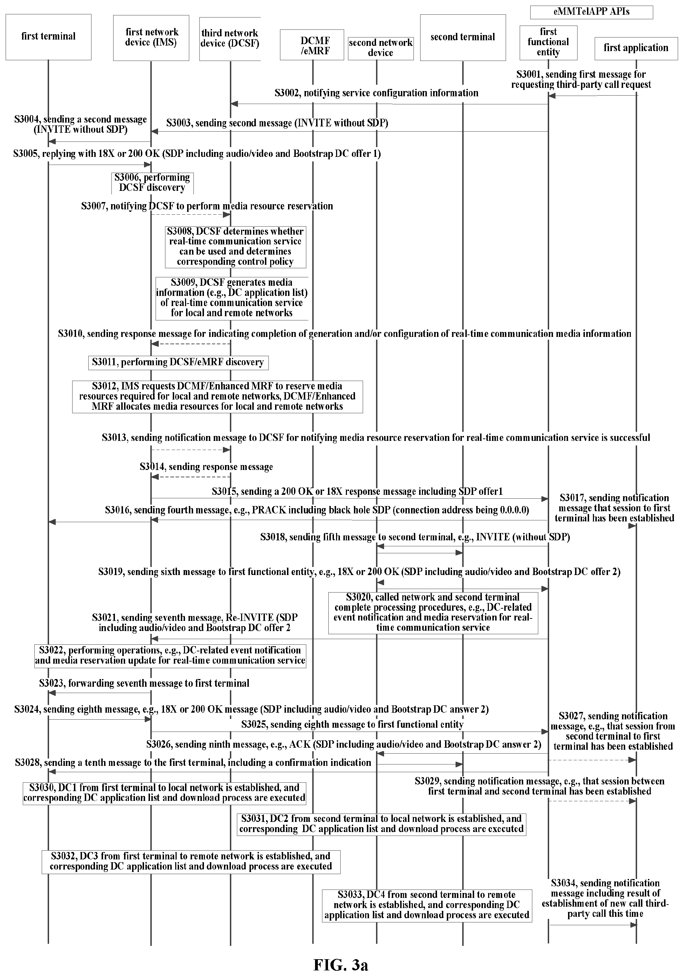

In one implementation, the first operation includes establishing the real-time communication service. A process in which the first application initiates the real-time communication service between the first terminal and the second terminal by invoking a capability exposure interface, as shown in FIG. 3a, may include the following steps.

Step S3001, the first application (e.g., a device such as an APP, an application server, a webpage, an enterprise IPPBX) invokes the capability exposure interface of the first functional entity, and sends a first message to the first functional entity for requesting a third-party call request for the real-time communication service between the first terminal and the second terminal, that is, the first application requests establishment of the real-time communication service between the first terminal and the second terminal.

Optionally, the first message includes one or more of:
the user identifier of the first terminal;
the user identifier of the second terminal;
the first indication information used to indicate whether the call capability of the real-time communication service is to be used;
the service configuration information;
the call event notification address; or
the call session identifier.

Optionally, the user identifier of the first terminal and the user identifier of the second terminal may be phone numbers respectively, the service configuration information may include a DC application list or an application list usable for executing the real-time communication service between the first terminal and the second terminal or for subsequent calls of the same type, and the call event notification address may include address information for the first application to receive event notifications, used by the first functional entity to feed back notification events during the real-time communication service process between the first terminal and the second terminal to the first application.

Step S3002, the first functional entity notifies service configuration information related to the real-time communication service to be performed between the first terminal and the second terminal this time to a third network device in a network system where the terminals perform the real-time communication service.

Optionally, the service configuration information includes a program list corresponding to the real-time communication service between the first terminal and the second terminal and/or a program list used for a certain type of call (e.g., the special type of call where a calling party is 10086).

In the embodiment of the present disclosure, optionally, the third network device includes, but is not limited to, the DCSF.

Optionally, the first functional entity sends the service configuration information to the DCSF by sending a second notification message to the third network device.

Furthermore, upon receiving the second notification message, the DCSF may configure the corresponding service configuration information for the real-time communication service between the first terminal and the second terminal.

Optionally, after completing the configuration of the service configuration information, the DCSF may send a response message to the first functional entity, where the response message includes a configuration result of the service configuration information and a successfully configured program list, etc.

It should be noted that in the embodiment of the present disclosure, the step of the first functional entity notifying the service configuration information to the third network device may be an optional step and is not a mandatory execution process. In the case that the first terminal and the second terminal have pre-subscribed to the service configuration information for performing the real-time communication service, the program list usable by the first terminal and the second terminal when executing this real-time communication service may be determined based on the pre-subscription.

Step S3003, the first functional entity sends a second message to the first terminal for which a third-party call is to be established. Optionally, the second message includes an Invite request without SDP information, or a SIP Invite request without SDP, etc. Optionally, the second message is sent to a first network device in the network system for the real-time communication service.

In the embodiment of the present disclosure, optionally, the first network device includes, but is not limited to, the IMS. Through the IMS, the second message can be sent to the first terminal.

Step S3004, the second message (the Invite request without SDP information) is forwarded to the first terminal via the first network device (e.g., the IMS).

Step S3005, after receiving the second message, the first terminal sends a fifteenth message to the first network device (e.g., the IMS). Optionally, the fifteenth message is a 200 OK or a 18X response message replied by the first terminal; specifically, the first terminal, based on its own capabilities, includes supported media information such as audio, video, and DC capabilities in an SDP offer, and the SDP offer (SDP offer1) is carried in the fifteenth message (e.g., the 200 OK or 18X response message) and replied to the first network device (e.g., the IMS).

Step S3006, upon recognizing that the fifteenth message (e.g., the 200 OK or 18X response) includes relevant media information of the real-time communication service and that the first terminal subscribes to the real-time communication service, the first network device (e.g., the IMS) determines that this call needs to be established in a form of the real-time communication service, and the fifteenth message (e.g., the 200 OK or 18X response) needs to be routed to a DCSF, and then determines a corresponding DCSF.

Step S3007, the first network device (e.g., the IMS) sends a third notification message to the DCSF, for notifying the DCSF to reserve media resources based on the real-time communication service.

Step S3008, the DCSF determines whether the real-time communication service can be used and determines a control policy for the real-time communication service.

Step S3009, the DCSF generates real-time communication media information for the local network and the remote network (e.g., including a program list, an application list, etc.).

Step S3010, the DCSF sends a response message to the first network device (e.g., the IMS), for indicating completion of generation and/or configuration of the real-time communication media information.

Step S3011, the first network device (e.g., the IMS) performs DCMF/Media Resource Function eMRF/MF discovery.

Step S3012, the first network device (e.g., the IMS) sends a request message to the DCMF/eMRF/MF, for requesting the DCMF/eMRF to reserve media resources required for the local network and the remote network, and the DCMF/eMRF allocates media resources for the local network and the remote network.

Step S3013, the first network device (e.g., the IMS) sends a notification message to the DCSF, for notifying that media resource reservation for this real-time communication service is successful.

Step S3014, the DCSF sends a response message to the notification message to the first network device (e.g., the IMS).

Through steps S3007 to S3014, the DCSF and the DCMF determine, based on the service configuration information obtained in step S3002, a DC application list or an application list usable for the real-time communication service of the first terminal.

Step S3015, after completing processing procedures such as relevant event notification and media reservation for the real-time communication service, the first network device (e.g., the IMS) sends a third message to the first functional entity, the third message being used to indicate that the first terminal confirms execution of establishment of the real-time communication service. Optionally, the third message is a 200 OK or 18X response message including the SDP offer1.

Step S3016, the first functional entity sends a fourth message to the first network device (e.g., the IMS), the fourth message being used to request establishment of a session between the first terminal and the first application.

Optionally, the fourth message replied by the first functional entity is an ACK message corresponding to the 200 OK, where the ACK includes a "black hole SDP" (rfc3725), i.e., the corresponding connection address is 0.0.0.0. After receiving the SDP, the first terminal will establish a session with the first functional entity, but no media can be transmitted within the session. Optionally, when the aforementioned SDP offer1 is carried in an 18X response, the fourth message here is a Provisional Response ACKnowledgement (PRACK) message including the "black hole SDP". A process of a 200 OK message not carrying new SDP information and a corresponding ACK after the PRACK is omitted herein.

Step S3017, the first functional entity sends a first notification message to the first application based on the call event notification address carried in the first message. Optionally, the first notification message includes a notification event of establishment of a session between the first terminal and the first functional entity.

It should be noted that in the embodiment of the present disclosure, this step is an optional step and is not a mandatory step.

Step S3018, the first functional entity sends a fifth message to a second terminal for which a third-party call is to be established, the fifth message being used to request establishment of the real-time communication service between the first terminal and the second terminal.

Optionally, the fifth message is an Invite request without SDP information, and the fifth message is sent to a second network device of the called network (e.g., an IMS of the called network), and then sent to the second terminal via the IMS of the called network (here, the called network).

Step S3019, the second terminal sends a sixth message to the first functional entity via the IMS of the called network, the sixth message being used to indicate that the second terminal confirms execution of establishment of the real-time communication service, and the sixth message including capability information of the second terminal for executing the real-time communication service;

Optionally, the second terminal, based on its own capabilities, determines the capability information of the real-time communication service, which includes supported audio, video, and DC capabilities, etc. Optionally, the sixth message is a 200 OK or 18X response message replied by the second terminal, wherein the capability information is included in an SDP offer, and the SDP offer (SDP offer2) is carried in the 200 OK or 18X response message replied by the second terminal.

Step S3020, the called network and the second terminal complete processing procedures such as DC-related event notification and media reservation for the real-time communication service. For the specific implementation process, reference can be made to steps S3007 to S3015 applied to the first terminal, and details are not repeated here.

Step S3021, the first functional entity, based on the received sixth message sent by the second terminal, determines that a session has been previously established with the first terminal. Optionally, at this time, instead of replying to the second terminal with an ACK including a "black hole SDP", it generates a re-Invite request to be sent to the first terminal based on the SDP offer2 carried in the 200 OK or 18X response replied by the second terminal, where the re-invite includes SDP offer2.

Optionally, the re-Invite request may be a seventh message, sent to the first network device (e.g., the IMS) of the first terminal, and then forwarded to the first terminal via the first network device of the first terminal, where the seventh message includes the capability information of the second terminal for executing the real-time communication service.

Step S3022, after receiving the seventh message, the first network device of the first terminal performs operations such as DC-related event notification and media reservation update for the real-time communication service.

Step S3023, the first network device forwards the seventh message including the capability information of the real-time communication service to the first terminal.

Step S3024, the first terminal, based on its own capabilities and the capability information of the second terminal for executing the real-time communication service, determines capability information supported by the first terminal for executing the real-time communication service, wherein the supported capability information includes audio, video, and DC capabilities, etc., and includes the supported capability information in an eighth message and sends the eighth message to the first network device.

Optionally, the capability information supported by the first terminal is included in an SDP answer (SDP answer 2), the eighth message is a 200 OK or 18X response message replied by the first terminal, and the SDP answer (SDP answer 2) is carried in the 200 OK or 18X response message.

Step S3025, the first network device sends the eighth message to the first functional entity, that is, the 200 OK or 18X response message including SDP answer 2 is replied to the first functional entity.

Step S3026, the first functional entity sends a ninth message to the second network device, the ninth message including the capability information of the first terminal for executing the real-time communication service.

Specifically, the first functional entity replies with the SDP answer2 included in an ACK (ninth message) to the second network device, and the second network device sends the ACK to the second terminal. At this point, the second terminal can establish a session with the first terminal based on its own SDP offer2 and the SDP answer 2 replied by the first terminal.

Optionally, when the aforementioned SDP offer2 is carried in an 18X response, the ninth message replied by the first functional entity here is a PRACK including the "black hole SDP". A process of a 200 OK message without new SDP information and a corresponding ACK after the PRACK is omitted herein.

Step S3027, the first functional entity sends a first notification message to the first application based on the call event notification address carried in the first message. Optionally, the first notification message includes a notification event of establishment of a session from the second terminal to the first terminal.

It should be noted that in the embodiment of the present disclosure, this step is an optional step and is not a mandatory step.

Step S3028, the first functional entity sends a tenth message to the first terminal, the tenth message including a confirmation indication used to indicate establishment of the real-time communication service between the first terminal and the second terminal.

At this point, the first terminal establishes a session with the second terminal based on the SDP offer2 of the second terminal and its own SDP answer 2, meaning that a normal session between the first terminal and the second terminal has been established.

Step S3029, the first functional entity sends a first notification message to the first application based on the call event notification address carried in the first message. Optionally, the first notification message includes a notification event of establishment of the session between the first terminal and the second terminal.

It should be noted that in the embodiment of the present disclosure, this step is an optional step and is not a mandatory step.

Step S3030, DC1 from the first terminal to a local network is established, and a corresponding DC application list and a DC application download process are executed. Optionally, this step determines, based on the service configuration information obtained in step S3002, which DC applications are usable by the first terminal for this call.

Step S3031, DC2 from the second terminal to the local network is established, and a corresponding DC application list and a DC application download process are executed. Optionally, this step determines, based on the service configuration information obtained in step S3002, which DC applications are usable by the second terminal for this call.

Step S3032, DC3 from the first terminal to a remote network is established, and a corresponding DC application list and a DC application download process are executed. Optionally, this step determines, based on the service configuration information obtained in step S3002, which DC applications are usable by the first terminal for this call.

Step S3033, DC4 from the second terminal to the remote network is established, and a corresponding DC application list and a DC application download process are executed. Optionally, this step determines, based on the service configuration information obtained in step S3002, which DC applications are usable by the second terminal for this call.

Step S3034, the first functional entity replies to the first application with a response corresponding to the third-party call request for establishing the real-time communication service this time (in the embodiments of the present disclosure, optionally, the response may be referred to as a first notification message). The response includes a result of establishment of the new call (third-party call) this time (success, failure, etc., and if failure occurs, a failure cause), a call identifier (session ID) established this time, and a DC application list finally usable for this call, and the like.

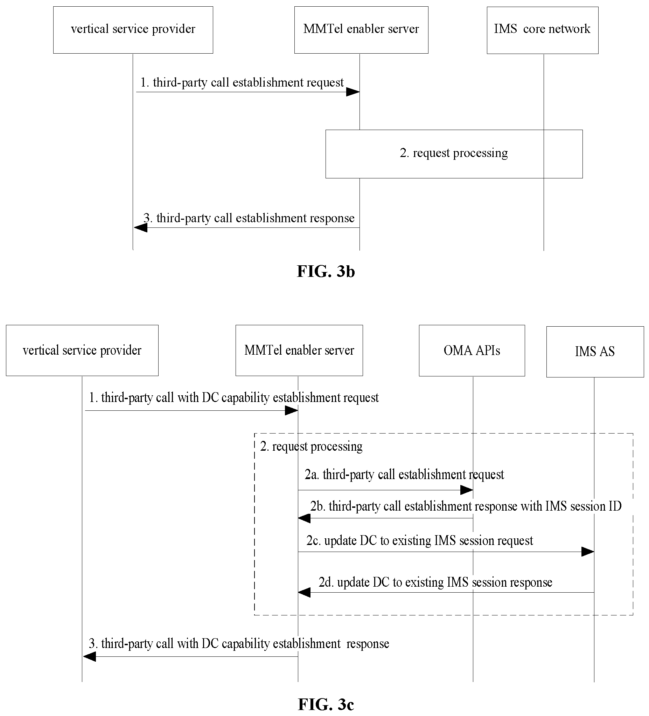

Optionally, a process in which the first application initiates the real-time communication service between the first terminal and the second terminal by invoking the capability exposure interface may also be as shown in FIG. 3b, and includes the following steps.

Step 1, a Vertical service provider sends a Third-Party call establishment request to an MMTel Enabler Server. This step corresponds to the aforementioned step 3001.

Step 2, the MMTel Enabler Server initiates Request processing to an IMS Core Network.

Step 3, the MMTel Enabler Server sends a Third-Party call establishment response to the Vertical service provider. This step corresponds to the aforementioned step 3034.

More specifically, as shown in FIG. 3c, the process includes the following steps:

Step 1, the Vertical service provider sends a Third-Party call with DC capability establishment request to the MMTel Enabler Server.

Step 2, the MMTel Enabler Server initiates Request processing to Open Mobile Alliance (OMA) APIs and the IMS AS. Specifically, the MMTel Enabler Server sends a Third-Party call establishment request to the OMA APIs, the OMA APIs send a Third-Party call establishment response with IMS session ID to the MMTel Enabler Server, and the MMTel Enabler Server sends an Update DC to existing IMS session request to the IMS AS, and the IMS AS sends an Update DC to existing IMS session response to the MMTel Enabler Server.

Step 3, the MMTel Enabler Server sends a Third-Party call with DC capability establishment response to the Vertical service provider.

Based on the above, in the process of establishing the real-time communication service between the first terminal and the second terminal, the method further includes:
sending a first notification message to the first application; wherein the first notification message includes one or more of:
a notification event indicating establishment of the real-time communication service between the first terminal and the second terminal;
a result of establishment of the real-time communication service between the first terminal and the second terminal;
a call identifier for establishment of the real-time communication service between the first terminal and the second terminal; or
a program list being used during execution of the real-time communication service between the first terminal and the second terminal.

The above call identifier may be a session ID, a session identifier, etc.

Optionally, the notification event includes one or more of:
establishment of a session between the first functional entity and the first terminal;
establishment of a session from the second terminal to the first terminal;
establishment of a session from the first terminal to the second terminal;
termination of the session from the second terminal to the first terminal; or
termination of the session from the first terminal to the second terminal.

In the embodiments of the present disclosure, after the third-party call between the first terminal and the second terminal is established according to the above manner, an application data channel ADC establishment process is executed; specifically, after the third-party call is established according to the above process, a call process between the first terminal and the second terminal is a usual call process of the real-time communication service, and the ADC establishment process is the same as that of a new call of the usual real-time communication service. The difference lies in that, at this time, the first terminal and the second terminal can only use the service configuration information obtained in the above step S3002 to determine a DC application list or an application list for the new call, and the ADC establishment process is not described in detail here.

Optionally, in the embodiment of the present disclosure, in step S210, the first message received by the first functional entity can be used to request termination of the real-time communication service between the first terminal and the second terminal, thereby implementing termination of third-party call of the real-time communication service.

Specifically, the first application (that is, the third-party application or a user server in the vertical industry, etc.) terminates the real-time communication service between the two terminals by invoking the exposure interface of the first functional entity.

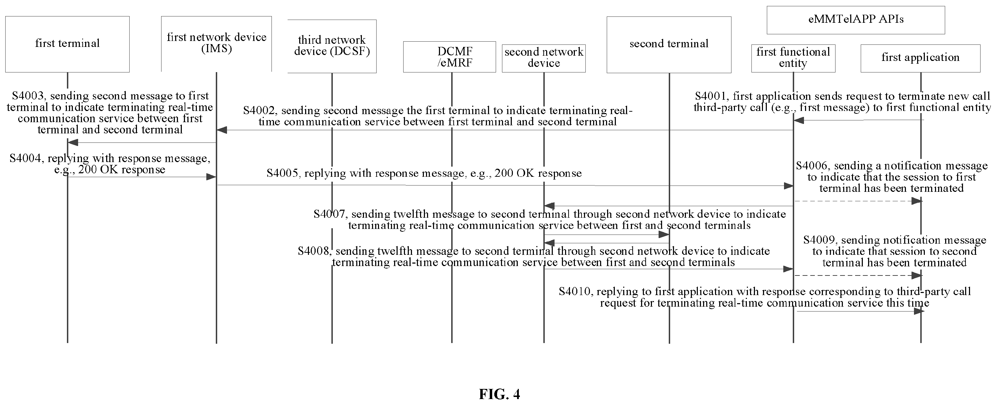

As shown in FIG. 4, a specific implementation process in which the first application terminates the real-time communication service between two terminals by invoking the exposure interface of the first functional entity includes the following steps.

Step S4001, the first application (e.g., a device such as an APP, an application server, a webpage, an enterprise IPPBX) invokes the capability exposure interface of the first functional entity and sends a request to terminate the new call (third-party call) (e.g., a first message) to the first functional entity, where the request includes information such as a call session identifier (Session ID).

Steps S4002 to S4005, the first functional entity sends a second message to the first terminal via the first network device (e.g., the IMS), to indicate termination of the real-time communication service between the first terminal and the second terminal. The first terminal replies with a 200 OK response (e.g., an eleventh message) to terminate its own session, where the eleventh message is used to indicate that the first terminal terminates the real-time communication service with the second terminal.

Step S4006, optionally, the first functional entity sends a first notification message to the first application based on the call event notification address carried when establishing the third-party call request or a callback address in the call termination request, to notify the first application of necessary events in a third-party call establishment process, such as that a session of the first terminal has been terminated.

Step S4007, the first functional entity sends a twelfth message to the second terminal through the second network device, to indicate termination of the real-time communication service between the first terminal and the second terminal.

Step S4008, the second terminal sends a thirteenth message (e.g., a 200 OK response) to the first functional entity through the second network device, indicating that the session for executing the real-time communication service by the second terminal is terminated.

Step S4009, optionally, the first functional entity sends a first notification message to the first application based on the call event notification address carried when establishing the third-party call request or a callback address in the call termination request, to notify the first application of necessary events in a third-party call establishment process, such as that a session of the second terminal has been terminated.

Step S4010, the first functional entity replies to the first application with a response (e.g., a first notification message) corresponding to the third-party call request for terminating the real-time communication service. The response includes a result of establishment of the third-party call for terminating the real-time communication service (success, failure, etc., and if failure occurs, a failure cause), and the like.

It should be noted that in the embodiments of the present disclosure, the first notification messages sent in the above different processes do not indicate the same message; the first notification messages in different processes are different messages respectively.

In addition, in embodiments of the present disclosure, the first message to the fifteenth message mentioned above are merely used to distinguish different messages, and the numbering sequences thereof do not indicate a transmission order of the messages in an interaction process.

In the embodiment of the present disclosure, in another implementation, optionally, the method further includes:
receiving a fourteenth message sent by the first application, the fourteenth message including a call session identifier and being used to request a query of a real-time communication service corresponding to the call session identifier;
sending, to the first application, one or more of: a user identifier of the first terminal, a user identifier of the second terminal, or service configuration information of the real-time communication service corresponding to the call session identifier.

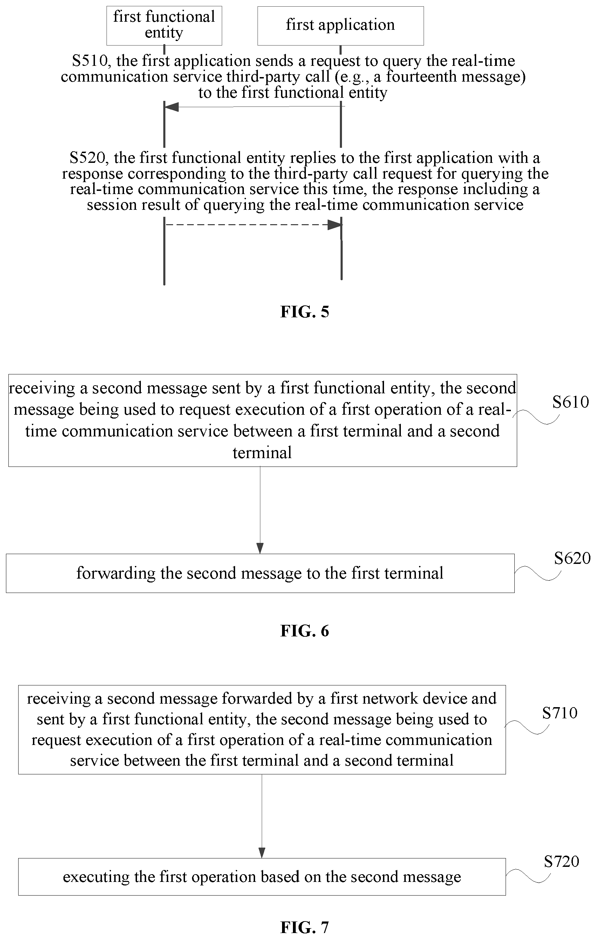

Using this implementation, a process in which the first application can query the real-time communication service between the first terminal and the second terminal by invoking the capability exposure interface of the first functional entity, as shown in FIG. 5, and the implementation includes the following steps.

Step S510, the first application (e.g., a device such as an APP, an application server, a webpage, an enterprise IPPBX) invokes the capability exposure interface of the first functional entity and sends a request to query the real-time communication service third-party call (e.g., a fourteenth message) to the first functional entity, where the request includes information such as a call session identifier (Session ID).

Step S520, the first functional entity replies to the first application with a response corresponding to the third-party call request for querying the real-time communication service. The response may include a session result of querying the real-time communication service (success, failure, etc., and if failure occurs, a failure cause), user identifiers of both parties of the call (the first terminal and the second terminal), a DC application list usable for the call, a call establishment time, and the like.

Using the call method according to the embodiment of the present disclosure, a third-party application initiates a call for a real-time communication service between two terminals by invoking the capability exposure interface, thereby implementing invocation of a 5G new call between terminals by the third-party application or the user in the vertical industry. In addition, the third-party application or the user in the vertical industry can dynamically specify, when initiating the call, real-time communication service DC applications usable for the call initiated between the two terminals, without depending on a DC application set subscribed to by the two terminals of the call.

An embodiment of the present disclosure further provides a call method, performed by a first network device. As shown in FIG. 6, the method includes the following steps.

Step S610, receiving a second message sent by a first functional entity, the second message being used to request execution of a first operation of a real-time communication service between a first terminal and a second terminal.

Step S620, forwarding the second message to the first terminal.

Using the call method according to the embodiment of the present disclosure, by arranging a first functional entity between a first application for the third-party application or the user in the vertical industry and a network system for implementing real-time communication services between terminals, the first functional entity is connected to the network system via an interface, can obtain a first message sent by the first application for requesting a first operation of a real-time communication service between the first terminal and the second terminal, and sends a second message for executing the first operation to a network device in the network where the terminal is located, thereby implementing invocation of the 5G new call (real-time communication service) between terminals through the first application.

Optionally, the call method, wherein the first operation includes one or more of:
establishing the real-time communication service; or
terminating the real-time communication service.

Optionally, the call method, wherein the first operation includes establishing the real-time communication service, and the method further includes:
receiving a fifteenth message sent by the first terminal, the fifteenth message including capability information of the first terminal for executing the real-time communication service;
when it is determined, based on the capability information of the first terminal for executing the real-time communication service, that the first terminal has an execution capability of the real-time communication service, sending the fifteenth message to a third network device, to cause the third network device to determine service configuration information for executing the real-time communication service by the first terminal;
sending a third message to the first functional entity, the third message being used to indicate that the first terminal confirms execution of establishment of the real-time communication service.

Optionally, the call method, wherein the method further includes one or more of:
receiving a fourth message sent by the first functional entity, the fourth message being used to request the first terminal to establish a session with the first application;
forwarding the fourth message to the first terminal;
receiving a seventh message sent by the first functional entity, the seventh message including capability information of the second terminal for executing the real-time communication service;
after forwarding the seventh message to the first terminal, receiving an eighth message sent by the first terminal, the eighth message including the capability information of the first terminal for executing the real-time communication service, and forwarding the eighth message to the first functional entity;
receiving a tenth message sent by the first functional entity, the tenth message including a confirmation indication used to indicate establishment of the real-time communication service between the first terminal and the second terminal; or
forwarding the tenth message to the first terminal.

Optionally, the call method, wherein the first operation includes terminating the real-time communication service, and the method further includes:
receiving an eleventh message sent by the first terminal in response to the second message, the eleventh message being used to indicate that the first terminal terminates the real-time communication service with the second terminal;
forwarding the eleventh message to the first functional entity.

For a specific implementation of the method described in the embodiments of the present disclosure applied to the first network device, reference may be made to the detailed description of the specific implementation applied to the first functional entity, and details are not repeated here.

An embodiment of the present disclosure further provides a call method, performed by a first terminal. As shown in FIG. 7, the method includes the following steps.

Step S710, receiving a second message forwarded by a first network device and sent by a first functional entity, the second message being used to request execution of a first operation of a real-time communication service between the first terminal and a second terminal;

Step S720, executing the first operation based on the second message.

Optionally, the call method, wherein the first operation includes one or more of:
establishing the real-time communication service; or
terminating the real-time communication service.

Optionally, the call method, wherein the first operation includes establishing the real-time communication service, and executing the first operation based on the second message includes:
sending a fifteenth message to the first network device based on the second message, the fifteenth message including capability information of the first terminal for executing the real-time communication service.

Optionally, the call method, wherein the method further includes one or more of:
receiving a fourth message sent by the first network device, the fourth message being used to request the first terminal to establish a session with the first application;
establishing the session with the first application based on the fourth message;
receiving a seventh message sent by the first network device, the seventh message including capability information of the second terminal for executing the real-time communication service;
sending an eighth message to the first network device, the eighth message including the capability information of the first terminal for executing the real-time communication service; or
receiving a tenth message sent by the first network device, the tenth message including a confirmation indication used to indicate establishment of the real-time communication service between the first terminal and the second terminal.

Optionally, the call method, wherein the method further includes:
after obtaining a confirmation indication of establishment of the real-time communication service between the first terminal and the second terminal, obtaining, by a third network device, service configuration information used for execution, in a local network, of the real-time communication service between the first terminal and the second terminal, and obtaining, by a fourth network device, service configuration information used for execution, in a remote network, of the real-time communication service between the first terminal and the second terminal.

Optionally, the call method, wherein the first operation includes terminating the real-time communication service, and executing the first operation based on the second message includes:
sending an eleventh message to the first network device, the eleventh message being used to indicate that the first terminal terminates the real-time communication service with the second terminal.

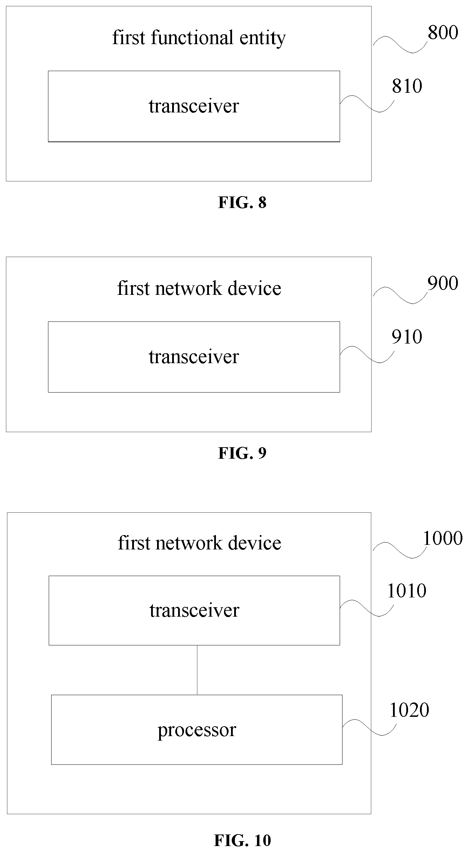

An embodiment of the present disclosure further provides a functional entity, wherein the functional entity is a first functional entity. As shown in FIG. 8, the first functional entity 800 includes a transceiver 810, and the transceiver 810 is configured to:
receive a first message sent by a first application, the first message being used to request a first operation of a real-time communication service between a first terminal and a second terminal;
send, based on the first message, a second message to a first network device in a network where the first terminal is located, the second message being used to request execution of the first operation.

Optionally, the functional entity, wherein the first operation includes one or more of:
establishing the real-time communication service; or
terminating the real-time communication service.

Optionally, the functional entity, wherein the first message includes one or more of:
a user identifier of the first terminal;
a user identifier of the second terminal;
first indication information used to indicate whether a call capability of the real-time communication service is to be used;
service configuration information;
a call event notification address; or
a call session identifier.

Optionally, the functional entity, wherein the first operation includes establishing the real-time communication service, and after sending the second message to the first network device in the network where the first terminal is located, the transceiver 810 is further configured to:
receive a third message sent by the first network device, the third message being used to indicate that the first terminal confirms execution of establishment of the real-time communication service;
send a fourth message to the first network device, the fourth message being used to request establishment of a session between the first terminal and the first application.

Optionally, the functional entity, wherein the transceiver 810 is further configured to:
after receiving the third message sent by the first network device, send a fifth message to a second network device where the second terminal is located, the fifth message being used to request establishment of the real-time communication service between the first terminal and the second terminal.

Optionally, the functional entity, wherein the transceiver 810 is further configured to perform at least one of:
receiving a sixth message sent by a second network device, the sixth message being used to indicate that the second terminal confirms execution of establishment of the real-time communication service, and the sixth message including capability information of the second terminal for executing the real-time communication service;
sending a seventh message to the first network device, the seventh message including the capability information of the second terminal for executing the real-time communication service; receiving an eighth message sent by the first network device, the eighth message including capability information of the first terminal for executing the real-time communication service;
sending a ninth message to the second network device, the ninth message including the capability information of the first terminal for executing the real-time communication service; or
sending a tenth message to the first terminal, the tenth message including a confirmation indication used to indicate establishment of the real-time communication service between the first terminal and the second terminal.

Optionally, the functional entity, wherein the transceiver 810 is further configured to:
send a first notification message to the first application; wherein the first notification message includes one or more of:
a notification event indicating establishment of the real-time communication service between the first terminal and the second terminal;
a result of establishment of the real-time communication service between the first terminal and the second terminal;
a call identifier for establishment of the real-time communication service between the first terminal and the second terminal; or
a program list being used during execution of the real-time communication service between the first terminal and the second terminal.

Optionally, the functional entity, wherein the notification event includes one or more of:
establishment of a session between the first functional entity and the first terminal;
establishment of a session from the second terminal to the first terminal;
establishment of a session from the first terminal to the second terminal;
termination of the session from the second terminal to the first terminal; or
termination of the session from the first terminal to the second terminal.

Optionally, the functional entity, wherein the method further includes:
sending a second notification message to a third network device; wherein the second notification message includes service configuration information of the real-time communication service between the first terminal and the second terminal.

Optionally, the functional entity, wherein the first operation includes terminating the real-time communication service, and the transceiver 810 is further configured to:
after receiving an eleventh message sent by the first network device in response to the second message, send a twelfth message to a second network device where the second terminal is located; wherein the eleventh message is used to indicate that the first terminal terminates the real-time communication service with the second terminal.

Optionally, the functional entity, wherein the transceiver 810 is further configured to:
receive a thirteenth message sent by the second network device, the thirteenth message being used to indicate that the second terminal terminates the real-time communication service with the first terminal.

Optionally, the functional entity, wherein the transceiver 810 is further configured to:
receive a fourteenth message sent by the first application, the fourteenth message including a call session identifier and being used to request a query of a real-time communication service corresponding to the call session identifier;
send, to the first application, one or more of: a user identifier of the first terminal, a user identifier of the second terminal, or service configuration information of the real-time communication service corresponding to the call session identifier.

An embodiment of the present disclosure further provides a network device, wherein the network device is a first network device. As shown in FIG. 9, the network device 900 includes a transceiver 910, and the transceiver 910 is configured to:
receive a second message sent by a first functional entity, the second message being used to request execution of a first operation of a real-time communication service between a first terminal and a second terminal;
forward the second message to the first terminal.

Optionally, the network device, wherein the first operation includes one or more of:
establishing the real-time communication service; or
terminating the real-time communication service.

Optionally, the network device, wherein the first operation includes establishing the real-time communication service, and the transceiver 910 is further configured to:
receive a fifteenth message sent by the first terminal, the fifteenth message including capability information of the first terminal for executing the real-time communication service;
when it is determined, based on the capability information of the first terminal for executing the real-time communication service, that the first terminal has an execution capability of the real-time communication service, send the fifteenth message to a third network device, to cause the third network device to determine service configuration information for executing the real-time communication service by the first terminal;
send a third message to the first functional entity, the third message being used to indicate that the first terminal confirms execution of establishment of the real-time communication service.

Optionally, the network device, wherein the transceiver 910 further includes one or more of:
receiving a fourth message sent by the first functional entity, the fourth message being used to request the first terminal to establish a session with the first application;
forwarding the fourth message to the first terminal;
receiving a seventh message sent by the first functional entity, the seventh message including capability information of the second terminal for executing the real-time communication service;
after forwarding the seventh message to the first terminal, receiving an eighth message sent by the first terminal, the eighth message including the capability information of the first terminal for executing the real-time communication service, and forwarding the eighth message to the first functional entity;
receiving a tenth message sent by the first functional entity, the tenth message including a confirmation indication used to indicate establishment of the real-time communication service between the first terminal and the second terminal; or
forwarding the tenth message to the first terminal.

Optionally, the network device, wherein the first operation includes terminating the real-time communication service, and the transceiver 910 is further configured to:
receive an eleventh message sent by the first terminal in response to the second message, the eleventh message being used to indicate that the first terminal terminates the real-time communication service with the second terminal;
forward the eleventh message to the first functional entity.

An embodiment of the present disclosure further provides a terminal, wherein the terminal is a first terminal. As shown in FIG. 10, the first terminal 1000 includes a transceiver 1010 and a processor 1020, wherein:
the transceiver 1010 is configured to receive a second message forwarded by a first network device and sent by a first functional entity, the second message being used to request execution of a first operation of a real-time communication service between the first terminal and a second terminal;
the processor 1020 is configured to execute the first operation based on the second message.

Optionally, the terminal, wherein the first operation includes one or more of:
establishing the real-time communication service; or
terminating the real-time communication service.

Optionally, the terminal, wherein the first operation includes establishing the real-time communication service, and the processor 1020 executing the first operation based on the second message includes:
sending a fifteenth message to the first network device based on the second message, the fifteenth message including capability information of the first terminal for executing the real-time communication service.

Optionally, the terminal, wherein the transceiver 1010 further includes one or more of:
receiving a fourth message sent by the first network device, the fourth message being used to request the first terminal to establish a session with the first application;
establishing the session with the first application based on the fourth message;
receiving a seventh message sent by the first network device, the seventh message including capability information of the second terminal for executing the real-time communication service;
sending an eighth message to the first network device, the eighth message including the capability information of the first terminal for executing the real-time communication service; or
receiving a tenth message sent by the first network device, the tenth message including a confirmation indication used to indicate establishment of the real-time communication service between the first terminal and the second terminal.

Optionally, the terminal, wherein the transceiver 1010 is further configured to:
after obtaining a confirmation indication of establishment of the real-time communication service between the first terminal and the second terminal, obtain, by a third network device, service configuration information used for execution, in a local network, of the real-time communication service between the first terminal and the second terminal, and obtain, by a fourth network device, service configuration information used for execution, in a remote network, of the real-time communication service between the first terminal and the second terminal.

Optionally, the terminal, wherein the first operation includes terminating the real-time communication service, and the processor 1020 executing the first operation based on the second message includes:
sending an eleventh message to the first network device, the eleventh message being used to indicate that the first terminal terminates the real-time communication service with the second terminal.

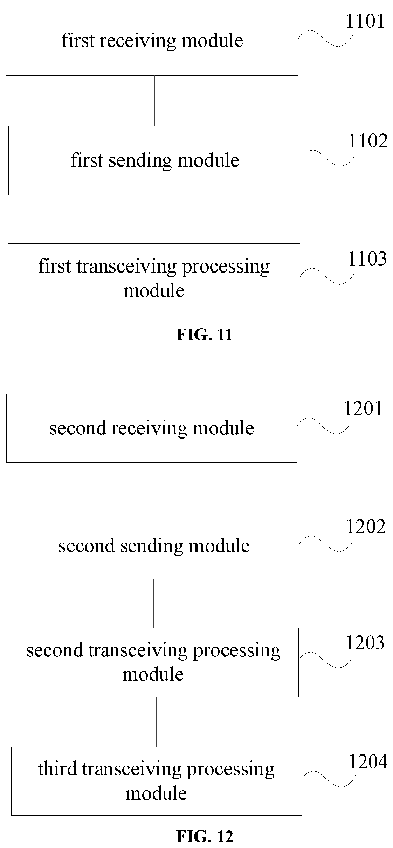

An embodiment of the present disclosure further provides a call apparatus, applied to a first functional entity. As shown in FIG. 11, the apparatus includes:
a first receiving module 1101 configured to receive a first message sent by a first application, the first message being used to request a first operation of a real-time communication service between a first terminal and a second terminal;
a first sending module 1102 configured to send, based on the first message, a second message to a first network device in a network where the first terminal is located, the second message being used to request execution of the first operation.

Optionally, the call apparatus, wherein the first operation includes one or more of:
establishing the real-time communication service; or
terminating the real-time communication service.

Optionally, the call apparatus, wherein the first message includes one or more of:
a user identifier of the first terminal;
a user identifier of the second terminal;
first indication information used to indicate whether a call capability of the real-time communication service is to be used;
service configuration information;
a call event notification address; or
a call session identifier.

Optionally, the call apparatus, wherein the first operation includes establishing the real-time communication service, and after sending the second message to the first network device in the network where the first terminal is located:
the first receiving module 1101 is further configured to receive a third message sent by the first network device, the third message being used to indicate that the first terminal confirms execution of establishment of the real-time communication service;
the first sending module 1102 is further configured to send a fourth message to the first network device, the fourth message being used to request establishment of a session between the first terminal and the first application.

Optionally, the call apparatus, wherein the first sending module 1102 is further configured to:
after receiving the third message sent by the first network device, send a fifth message to a second network device where the second terminal is located, the fifth message being used to request establishment of the real-time communication service between the first terminal and the second terminal.

Optionally, the call apparatus, wherein the apparatus further includes a first transceiving processing module 1103 configured to perform at least one of:
receiving a sixth message sent by a second network device, the sixth message being used to indicate that the second terminal confirms execution of establishment of the real-time communication service, and the sixth message including capability information of the second terminal for executing the real-time communication service;
sending a seventh message to the first network device, the seventh message including the capability information of the second terminal for executing the real-time communication service;
receiving an eighth message sent by the first network device, the eighth message including capability information of the first terminal for executing the real-time communication service;
sending a ninth message to the second network device, the ninth message including the capability information of the first terminal for executing the real-time communication service; or
sending a tenth message to the first terminal, the tenth message including a confirmation indication used to indicate establishment of the real-time communication service between the first terminal and the second terminal.

Optionally, the call apparatus, wherein the first sending module 1102 is further configured to:
send a first notification message to the first application; wherein the first notification message includes one or more of:
a notification event indicating establishment of the real-time communication service between the first terminal and the second terminal;
a result of establishment of the real-time communication service between the first terminal and the second terminal;
a call identifier for establishment of the real-time communication service between the first terminal and the second terminal; or
a program list being used during execution of the real-time communication service between the first terminal and the second terminal.

Optionally, the call apparatus, wherein the notification event includes one or more of:
establishment of a session between the first functional entity and the first terminal;
establishment of a session from the second terminal to the first terminal;
establishment of a session from the first terminal to the second terminal;
termination of the session from the second terminal to the first terminal; or
termination of the session from the first terminal to the second terminal.

Optionally, the call apparatus, wherein the first sending module 1102 is further configured to:
send a second notification message to a third network device; wherein the second notification message includes service configuration information of the real-time communication service between the first terminal and the second terminal.

Optionally, the call apparatus, wherein the first operation includes terminating the real-time communication service, and the first sending module 1102 is further configured to:
after receiving an eleventh message sent by the first network device in response to the second message, send a twelfth message to a second network device where the second terminal is located; wherein the eleventh message is used to indicate that the first terminal terminates the real-time communication service with the second terminal.

Optionally, the call apparatus, wherein the first receiving module 1101 is further configured to:
receive a thirteenth message sent by the second network device, the thirteenth message being used to indicate that the second terminal terminates the real-time communication service with the first terminal.

Optionally, the call apparatus, wherein:
the first receiving module 1101 is further configured to receive a fourteenth message sent by the first application, the fourteenth message including a call session identifier and being used to request a query of a real-time communication service corresponding to the call session identifier;
the first sending module 1102 is further configured to send, to the first application, one or more of: a user identifier of the first terminal, a user identifier of the second terminal, or service configuration information of the real-time communication service corresponding to the call session identifier.

An embodiment of the present disclosure further provides a call apparatus, applied to a first network device. As shown in FIG. 12, the apparatus includes:
a second receiving module 1201 configured to receive a second message sent by a first functional entity, the second message being used to request execution of a first operation of a real-time communication service between a first terminal and a second terminal;
a second sending module 1202 configured to forward the second message to the first terminal.

Optionally, the call apparatus, wherein the first operation includes one or more of:
establishing the real-time communication service; or
terminating the real-time communication service.

Optionally, the call apparatus, wherein the first operation includes establishing the real-time communication service, and the apparatus further includes a second transceiving processing module 1203 configured to:
receive a fifteenth message sent by the first terminal, the fifteenth message including capability information of the first terminal for executing the real-time communication service;
when it is determined, based on the capability information of the first terminal for executing the real-time communication service, that the first terminal has an execution capability of the real-time communication service, send the fifteenth message to a third network device, to cause the third network device to determine service configuration information for executing the real-time communication service by the first terminal;
send a third message to the first functional entity, the third message being used to indicate that the first terminal confirms execution of establishment of the real-time communication service.

Optionally, the call apparatus, wherein the apparatus further includes a third transceiving processing module 1204 configured to perform one or more of:
receiving a fourth message sent by the first functional entity, the fourth message being used to request the first terminal to establish a session with the first application;
forwarding the fourth message to the first terminal;
receiving a seventh message sent by the first functional entity, the seventh message including capability information of the second terminal for executing the real-time communication service;
after forwarding the seventh message to the first terminal, receiving an eighth message sent by the first terminal, the eighth message including the capability information of the first terminal for executing the real-time communication service, and forwarding the eighth message to the first functional entity;
receiving a tenth message sent by the first functional entity, the tenth message including a confirmation indication used to indicate establishment of the real-time communication service between the first terminal and the second terminal; or
forwarding the tenth message to the first terminal.

Optionally, the call apparatus, wherein the first operation includes terminating the real-time communication service:
the second receiving module 1201 is further configured to receive an eleventh message sent by the first terminal in response to the second message, the eleventh message being used to indicate that the first terminal terminates the real-time communication service with the second terminal;
the second sending module 1202 is further configured to forward the eleventh message to the first functional entity.

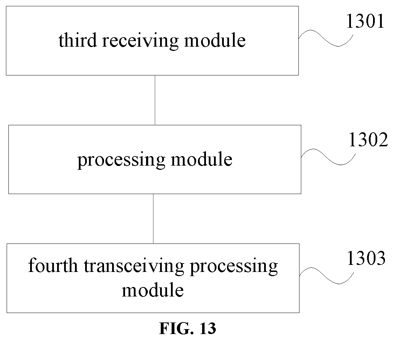

An embodiment of the present disclosure further provides a call apparatus, applied to a first terminal. As shown in FIG. 13, the apparatus includes:
a third receiving module 1301 configured to receive a second message forwarded by a first network device and sent by a first functional entity, the second message being used to request execution of a first operation of a real-time communication service between the first terminal and a second terminal;
a processing module 1302 configured to execute the first operation based on the second message.

Optionally, the call apparatus, wherein the first operation includes one or more of:
establishing the real-time communication service; or
terminating the real-time communication service.

Optionally, the call apparatus, wherein the first operation includes establishing the real-time communication service, and the processing module 1302 executing the first operation based on the second message includes:
sending a fifteenth message to the first network device based on the second message, the fifteenth message including capability information of the first terminal for executing the real-time communication service.

Optionally, the call apparatus, wherein the apparatus further includes a fourth transceiving processing module 1303 configured to perform one or more of:
receiving a fourth message sent by the first network device, the fourth message being used to request the first terminal to establish a session with the first application;
establishing the session with the first application based on the fourth message;
receiving a seventh message sent by the first network device, the seventh message including capability information of the second terminal for executing the real-time communication service;
sending an eighth message to the first network device, the eighth message including the capability information of the first terminal for executing the real-time communication service; or
receiving a tenth message sent by the first network device, the tenth message including a confirmation indication used to indicate establishment of the real-time communication service between the first terminal and the second terminal.

Optionally, the call apparatus, wherein the processing module 1302 is further configured to:
after obtaining a confirmation indication of establishment of the real-time communication service between the first terminal and the second terminal, obtain, by a third network device, service configuration information used for execution, in a local network, of the real-time communication service between the first terminal and the second terminal, and obtain, by a fourth network device, service configuration information used for execution, in a remote network, of the real-time communication service between the first terminal and the second terminal.

Optionally, the call apparatus, wherein the first operation includes terminating the real-time communication service, and the processing module 1302 executing the first operation based on the second message includes:
sending an eleventh message to the first network device, the eleventh message being used to indicate that the first terminal terminates the real-time communication service with the second terminal.

An embodiment of the present disclosure further provides a network device, including a processor, a memory, and a program stored on the memory and executable on the processor, wherein the program, when executed by the processor, implements the call method according to any one of the above.

For a specific implementation of the program running on the processor of the network device to execute the call method, reference can be made to the detailed description when the call method is applied to the first functional entity and the first network device, and details are not repeated here.

An embodiment of the present disclosure further provides a terminal, including a processor, a memory, and a program stored on the memory and executable on the processor, wherein the program, when executed by the processor, implements the call method according to any one of the above.

For a specific implementation of the program running on the processor of the network device to execute the call method, reference can be made to the detailed description when the call method is applied to the terminal, and details are not repeated here.

In addition, a specific embodiment of the present disclosure further provides a readable storage medium storing thereon a computer program, wherein the program, when executed by a processor, implements the steps of the call method according to any one of the above.

Specifically, the readable storage medium is applied to the above first functional entity, first network device, or first terminal. When applied to the first functional entity, first network device, or first terminal, the execution steps in the corresponding call method are as described in detail above, and details are not repeated here.

In several embodiments of the present disclosure, it should be understood that the disclosed methods and apparatuses may be implemented in other ways. For example, the apparatus embodiments described above are merely illustrative. The division of units is only a logical functional division, and other division manners may be adopted in actual implementation, for example, multiple units or components may be combined or integrated into another system, or some features may be omitted or not implemented. In addition, the mutual coupling or direct coupling or communication connection shown or discussed may be implemented via interfaces, and indirect coupling or communication connection between apparatuses or units may be in electrical, mechanical, or other forms.

In addition, the functional units in the various embodiments of the present disclosure may be integrated into one processing unit, or each unit may exist physically separately, or two or more units may be integrated into a single unit. The integrated unit described above may be implemented either in the form of hardware or in the form of hardware combined with software functional units.

The integrated unit implemented in the form of software functional units may be stored in a computer-readable storage medium. The software functional units are stored in the storage medium and include several instructions to cause a computer device (which may be a personal computer, a server, or a network device) to perform some steps of the transceiving method described in the embodiments of the present disclosure. The storage medium includes a USB flash drive, a removable hard disk, a read-only memory (ROM), a random access memory (RAM), a magnetic disk, an optical disc, and other media capable of storing program codes.

The above are merely preferred implementations of the present disclosure. It should be noted that for those of ordinary skill in the art, improvements and modifications can be made without departing from the principles of the present disclosure, and such improvements and modifications shall fall within the protection scope of the present disclosure.

## Claims

1. A call method, performed by a first functional entity, comprising:
receiving a first message sent by a first application, the first message being used to request a first operation of a real-time communication service between a first terminal and a second terminal;
sending, based on the first message, a second message to a first network device in a network where the first terminal is located, the second message being used to request execution of the first operation.

2. The call method according to claim 1, wherein the first operation comprises one or more of:
establishing the real-time communication service; or
terminating the real-time communication service.

3. The call method according to claim 1, wherein the first message comprises one or more of:
a user identifier of the first terminal;
a user identifier of the second terminal;
first indication information used to indicate whether a call capability of the real-time communication service is to be used;
service configuration information;
a call event notification address; or
a call session identifier.

4. The call method according to claim 2, wherein the first operation comprises establishing the real-time communication service, and after sending the second message to the first network device in the network where the first terminal is located, the method further comprises:
receiving a third message sent by the first network device, the third message being used to indicate that the first terminal confirms execution of establishment of the real-time communication service;
sending a fourth message to the first network device, the fourth message being used to request establishment of a session between the first terminal and the first application.

5. The call method according to claim 4, further comprising:
after receiving the third message sent by the first network device, sending a fifth message to a second network device where the second terminal is located, the fifth message being used to request establishment of the real-time communication service between the first terminal and the second terminal.

6. The call method according to claim 4 or 5, further comprising at least one of:
receiving a sixth message sent by a second network device, the sixth message being used to indicate that the second terminal confirms execution of establishment of the real-time communication service, and the sixth message comprising capability information of the second terminal for executing the real-time communication service;
sending a seventh message to the first network device, the seventh message comprising the capability information of the second terminal for executing the real-time communication service;
receiving an eighth message sent by the first network device, the eighth message comprising capability information of the first terminal for executing the real-time communication service;
sending a ninth message to the second network device, the ninth message comprising the capability information of the first terminal for executing the real-time communication service; or
sending a tenth message to the first terminal, the tenth message comprising a confirmation indication used to indicate establishment of the real-time communication service between the first terminal and the second terminal.

7. The call method according to claim 1, further comprising:
sending a first notification message to the first application, wherein the first notification message comprises one or more of:
a notification event indicating establishment of the real-time communication service between the first terminal and the second terminal;
a result of establishment of the real-time communication service between the first terminal and the second terminal;
a call identifier for establishment of the real-time communication service between the first terminal and the second terminal; or
a program list being used during execution of the real-time communication service between the first terminal and the second terminal.

8. The call method according to claim 7, wherein the notification event comprises one or more of:
establishment of a session between the first functional entity and the first terminal;
establishment of a session from the second terminal to the first terminal;
establishment of a session from the first terminal to the second terminal;
termination of the session from the second terminal to the first terminal; or
termination of the session from the first terminal to the second terminal.

9. The call method according to claim 1, further comprising:
sending a second notification message to a third network device, wherein the second notification message comprises service configuration information of the real-time communication service between the first terminal and the second terminal.

10. The call method according to claim 2, wherein the first operation comprises terminating the real-time communication service, and the method further comprises:
after receiving an eleventh message sent by the first network device in response to the second message, sending a twelfth message to a second network device where the second terminal is located, wherein the eleventh message is used to indicate that the first terminal terminates the real-time communication service with the second terminal.

11. The call method according to claim 10, further comprising:
receiving a thirteenth message sent by the second network device, the thirteenth message being used to indicate that the second terminal terminates the real-time communication service with the first terminal.

12. The call method according to claim 1, further comprising:
receiving a fourteenth message sent by the first application, the fourteenth message comprising a call session identifier and being used to request a query of a real-time communication service corresponding to the call session identifier;
sending, to the first application, one or more of: a user identifier of the first terminal, a user identifier of the second terminal, or service configuration information of the real-time communication service corresponding to the call session identifier.

13. A call method, performed by a first network device, comprising:
receiving a second message sent by a first functional entity, the second message being used to request execution of a first operation of a real-time communication service between a first terminal and a second terminal;
forwarding the second message to the first terminal.

14. The call method according to claim 13, wherein the first operation comprises one or more of:
establishing the real-time communication service; or
terminating the real-time communication service.

15. The call method according to claim 14, wherein the first operation comprises establishing the real-time communication service, and the method further comprises:
receiving a fifteenth message sent by the first terminal, the fifteenth message comprising capability information of the first terminal for executing the real-time communication service;
when it is determined, based on the capability information of the first terminal for executing the real-time communication service, that the first terminal has an execution capability of the real-time communication service, sending the fifteenth message to a third network device, to cause the third network device to determine service configuration information for executing the real-time communication service by the first terminal;
sending a third message to the first functional entity, the third message being used to indicate that the first terminal confirms execution of establishment of the real-time communication service.

16. The call method according to claim 15, further comprising one or more of:
receiving a fourth message sent by the first functional entity, the fourth message being used to request the first terminal to establish a session with a first application;
forwarding the fourth message to the first terminal;
receiving a seventh message sent by the first functional entity, the seventh message comprising capability information of the second terminal for executing the real-time communication service;
after forwarding the seventh message to the first terminal, receiving an eighth message sent by the first terminal, the eighth message comprising the capability information of the first terminal for executing the real-time communication service, and forwarding the eighth message to the first functional entity;
receiving a tenth message sent by the first functional entity, the tenth message comprising a confirmation indication used to indicate establishment of the real-time communication service between the first terminal and the second terminal; or
forwarding the tenth message to the first terminal.

17. The call method according to claim 14, wherein the first operation comprises terminating the real-time communication service, and the method further comprises:
receiving an eleventh message sent by the first terminal in response to the second message, the eleventh message being used to indicate that the first terminal terminates the real-time communication service with the second terminal;
forwarding the eleventh message to the first functional entity.

18. A call method, performed by a first terminal, comprising:
receiving a second message forwarded by a first network device and sent by a first functional entity, the second message being used to request execution of a first operation of a real-time communication service between the first terminal and a second terminal;
executing the first operation based on the second message.

19. The call method according to claim 18, wherein the first operation comprises one or more of:
establishing the real-time communication service; or
terminating the real-time communication service.

20. The call method according to claim 19, wherein the first operation comprises establishing the real-time communication service, and executing the first operation based on the second message comprises:
sending a fifteenth message to the first network device based on the second message, the fifteenth message comprising capability information of the first terminal for executing the real-time communication service.

21. The call method according to claim 20, further comprising one or more of:
receiving a fourth message sent by the first network device, the fourth message being used to request the first terminal to establish a session with a first application;
establishing the session with the first application based on the fourth message;
receiving a seventh message sent by the first network device, the seventh message comprising capability information of the second terminal for executing the real-time communication service;
sending an eighth message to the first network device, the eighth message comprising the capability information of the first terminal for executing the real-time communication service; or
receiving a tenth message sent by the first network device, the tenth message comprising a confirmation indication used to indicate establishment of the real-time communication service between the first terminal and the second terminal.

22. The call method according to claim 18 or 20, further comprising:
after obtaining a confirmation indication of establishment of the real-time communication service between the first terminal and the second terminal, obtaining, by a third network device, service configuration information used for execution, in a local network, of the real-time communication service between the first terminal and the second terminal, and obtaining, by a fourth network device, service configuration information used for execution, in a remote network, of the real-time communication service between the first terminal and the second terminal.

23. The call method according to claim 19, wherein the first operation comprises terminating the real-time communication service, and executing the first operation based on the second message comprises:
sending an eleventh message to the first network device, the eleventh message being used to indicate that the first terminal terminates the real-time communication service with the second terminal.

24. A functional entity, wherein the functional entity is a first functional entity, and comprises a transceiver configured to:
receive a first message sent by a first application, the first message being used to request a first operation of a real-time communication service between a first terminal and a second terminal;
send, based on the first message, a second message to a first network device in a network where the first terminal is located, the second message being used to request execution of the first operation.

25. A network device, wherein the network device is a first network device, and comprises a transceiver configured to:
receive a second message sent by a first functional entity, the second message being used to request execution of a first operation of a real-time communication service between a first terminal and a second terminal;
forward the second message to the first terminal.

26. A terminal, wherein the terminal is a first terminal, and comprises a transceiver and a processor, wherein:
the transceiver is configured to receive a second message forwarded by a first network device and sent by a first functional entity, the second message being used to request execution of a first operation of a real-time communication service between the first terminal and a second terminal;
the processor is configured to execute the first operation based on the second message.

27. A call apparatus, applied to a first functional entity, comprising:
a first receiving module configured to receive a first message sent by a first application, the first message being used to request a first operation of a real-time communication service between a first terminal and a second terminal;
a first sending module configured to send, based on the first message, a second message to a first network device in a network where the first terminal is located, the second message being used to request execution of the first operation.

28. A call apparatus, applied to a first network device, comprising:
a second receiving module configured to receive a second message sent by a first functional entity, the second message being used to request execution of a first operation of a real-time communication service between a first terminal and a second terminal;
a second sending module configured to forward the second message to the first terminal.

29. A call apparatus, applied to a first terminal, comprising:
a third receiving module configured to receive a second message forwarded by a first network device and sent by a first functional entity, the second message being used to request execution of a first operation of a real-time communication service between the first terminal and a second terminal;
a processing module configured to execute the first operation based on the second message.

30. A network device, comprising a processor, a memory, and a program stored on the memory and executable on the processor, wherein the program, when executed by the processor, implements the call method according to any one of claims 1 to 17.

31. A terminal, comprising a processor, a memory, and a program stored on the memory and executable on the processor, wherein the program, when executed by the processor, implements the call method according to any one of claims 18 to 23.

32. A readable storage medium storing thereon a program, wherein the program, when executed by a processor, implements steps of the call method according to any one of claims 1 to 23.
